# EUROPÄISCHE PATENTANMELDUNG

(11) **EP 4 656 582 A1**
(43) Veröffentlichungstag der Anmeldung: **03.12.2025**
(21) Anmeldenummer: 25178805.5
(22) Anmeldetag: 26.05.2025
(51) Int. Cl.: B66F 9/075, B60K 7/00, B66F 9/22, B66F 9/24

(54) **FAHRANTRIEB**

(30) Priorität: 29.05.2024 AT 5006324 U
(71) Anmelder: Palfinger AG, 5101 Bergheim bei Salzburg (AT)
(72) Erfinder: HASLAUER, Mario, 5101 Bergheim bei Salzburg (AT)
(74) Vertreter: Torggler & Hofmann Patentanwälte - Innsbruck

(57) **Zusammenfassung**

Fahrantrieb (1) für eine Hebevorrichtung (2) mit zumindest zwei mit Hydraulikfluid (41) antreibbaren Hydraulikmotoren (3, 4, 5), zumindest einer Pumpe (9), zumindest einem in einer Fluidleitung (10, 11) zwischen der Pumpe (9) und zumindest einem der Hydraulikmotoren (3, 4) angeordneten, mit einem Steuersignal steuerbaren Schaltventil (20, 21, 22, 23) und einer Steuerung (30) zum Steuern des zumindest einen steuerbaren Schaltventils (20, 21, 22, 23) mit zumindest einem Steuersignal, wobei das zumindest eine steuerbare Schaltventil (20, 21, 22, 23) zumindest zwischen einem zumindest teilweise fluidsperrenden Schaltzustand und einem zumindest teilweise fluidleitenden Schaltzustand schaltbar ist und die Steuerung (30) dazu ausgebildet ist, mit einem Steuersignal zum zumindest teilweisen Abschalten zumindest eines Hydraulikmotors (3, 4) einen Schaltzustand des steuerbaren Schaltventils (20, 21, 22, 23) in einen zumindest teilweise fluidsperrenden Schaltzustand zu schalten, und mit einem Steuersignal zum zumindest teilweisen Zuschalten zumindest eines Hydraulikmotors (3, 4) einen Schaltzustand des steuerbaren Schaltventils (20, 21, 22, 23) in einen zumindest teilweise fluidleitenden Schaltzustand zu schalten.

## Beschreibung

Die Erfindung betrifft einen Fahrantrieb für eine Hebevorrichtung gemäß dem Oberbegriff des Anspruchs 1, ein Verfahren zur Versorgung eines solchen Fahrantriebs einer Hebevorrichtung mit Hydraulikfluid und eine Hebevorrichtung mit einem solchen Fahrantrieb.

Im Stand der Technik sind Fahrantriebe bekannt, bei welchen Antriebsräder einer Hebevorrichtung mit Hydraulikmotoren antreibbar sind. Die Verteilung eines durch eine Pumpe eines solchen Fahrantriebs geförderten Hydraulikfluids kann zwischen - insbesondere parallel geschalteten - Hydraulikmotoren entsprechend einer jeweiligen Haftreibung des Antriebsrads zum Untergrund erfolgen. Für den Fall, dass eines der Antriebsräder die Bodenhaftung verliert oder zu verlieren droht, kann die Verteilung des Hydraulikfluids mittels einer hydraulischen Differentialsperre geregelt werden. Eine Regelung des Flusses des Hydraulikfluids mittels einer solchen hydraulischen Differentialsperre weist nachteilig Leistungsverluste auf. Auch wird durch eine solche hydraulische Differentialsperre eine Kurvenfahr erschwert.

Aufgabe der Erfindung ist es, einen Fahrantrieb für eine Hebevorrichtung, ein Verfahren zur Versorgung eines Fahrantriebs einer Hebevorrichtung mit Hydraulikfluid und eine Hebevorrichtung mit einem solchen Fahrantrieb anzugeben, bei welchen die eingangs genannten Nachteile nicht auftreten.

Diese Aufgabe wird durch einen Fahrantrieb für eine Hebevorrichtung mit den Merkmalen des Anspruchs 1, ein Verfahren zur Versorgung eines solchen Fahrantriebs einer Hebevorrichtung mit Hydraulikfluid und eine Hebevorrichtung mit einem solchen Fahrantrieb gelöst.

Vorteilhafte Ausführungen der Erfindung sind in den abhängigen Ansprüchen definiert.

Der erfindungsgemäße Fahrantrieb weist zumindest zwei mit Hydraulikfluid antreibbare Hydraulikmotoren zum Einzelradantrieb von Antriebsrädern auf. Der Fahrantrieb kann sich für den Antrieb von Antriebsrädern einer Hebevorrichtung zum Befahren eines Untergrunds eignen.

In einer bevorzugten Ausführung kann der Fahrantrieb drei mit Hydraulikfluid antreibbare Hydraulikmotoren zum Einzelradantrieb von drei Antriebsrädern für eine Hebevorrichtung aufweisen. Ausführungen des Fahrantriebs mit vier mit Hydraulikfluid antreibbaren Hydraulikmotoren zum Einzelradantrieb von vier Antriebsrädern sind ebenso möglich.

Zur Versorgung der Hydraulikmotoren mit Hydraulikfluid weist der Fahrantrieb zumindest eine Pumpe zum Fördern von Hydraulikfluid auf. Zur Leitung von Hydraulikfluid können zwischen der Pumpe und den Hydraulikmotoren verlaufende Fluidleitungen vorgesehen sein. Die Pumpe - und weitere Funktionen des Fahrantriebs und einer Hebevorrichtung - kann durch eine Steuerung des Fahrantriebs steuerbar sein.

Der Fahrantrieb weist weiter zumindest ein in einer Fluidleitung zwischen der Pumpe und zumindest einem der Hydraulikmotoren angeordnetes, mit einem Steuersignal steuerbares Schaltventil auf.

Das zumindest eine steuerbare Schaltventil ist zumindest zwischen einem zumindest teilweise fluidsperrenden Schaltzustand und einem zumindest teilweise fluidleitenden Schaltzustand schaltbar.

Das zumindest eine steuerbare Schaltventil kann diskrete Schaltzustände aufweisen. Insbesondere kann das zumindest eine steuerbare Schaltventil zumindest zwischen einem im Wesentlichen vollständig fluidsperrenden Schaltzustand und einem im Wesentlichen ungehindert fluidleitenden Schaltzustand schaltbar sein.

Das zumindest eine steuerbare Schaltventil kann als Proportionalventil ausgeführt sein. Insbesondere kann das zumindest eine als Proportionalventil ausgeführte steuerbare Schaltventil beliebige Zwischenstellungen zwischen einem im Wesentlichen vollständig fluidsperrenden Schaltzustand und einem im Wesentlichen ungehindert fluidleitenden Schaltzustand annehmen.

Das zumindest eine steuerbare Schaltventil kann zumindest zwischen einem im Wesentlichen vollständig fluidsperrenden Schaltzustand und einem im Wesentlichen ungehindert fluidleitenden Schaltzustand schaltbar sein, wobei das Schaltventil in zumindest einer Zwischenstellung des Schaltventils einen hydraulischen Leerlauf aufweisen kann. In einem solchen Schaltzustand können die Eingangsseite und die Ausgangsseiten des Schaltventils miteinander fluidleitend verbunden sein. Ein solcher Schaltzustand ist als "open center" bekannt. Mit einer solchen Zwischenstellung kann es möglich sein, den Schaltzustand eines Schaltventils während des Fahrbetriebs des Fahrantriebs umzuschalten.

Das zumindest eine Schaltventil kann an einer Eingangsseite und einer Ausgangsseite zumindest eines Hydraulikmotors angeordnet sein.

Das zumindest eine Schaltventil kann an parallel geschalteten Eingangsseiten und an parallel geschalteten Ausgangsseiten von zwei oder mehr Hydraulikmotoren angeordnet sein.

In einer bevorzugten Ausführung mit drei mit Hydraulikfluid antreibbaren Hydraulikmotoren kann der Fahrantrieb für zwei der Hydraulikmotoren zumindest ein in der Fluidleitung zwischen der Pumpe und den zwei Hydraulikmotoren angeordnetes steuerbares Schaltventil aufweisen. Die zwei Hydraulikmotoren können einzeln oder gemeinsam mit dem zumindest einen steuerbaren Schaltventil schaltbar sein.

Mit dem zumindest einen steuerbaren Schaltventil kann eine Fluidleitung zwischen der Pumpe und zumindest einem der Hydraulikmotoren zumindest teilweise fluidsperrend oder zumindest teilweise fluidleitenden schaltbar sein. Insbesondere kann mit dem zumindest einen steuerbaren Schaltventil eine Fluidleitung zwischen der Pumpe und zumindest einem der Hydraulikmotoren fluidsperrend oder fluidleitenden schaltbar sein.

Der Fahrantrieb weist eine Steuerung zum Steuern des zumindest einen steuerbaren Schaltventils mit zumindest einem Steuersignal auf, wobei die Steuerung dazu ausgebildet ist, Schaltzustände des zumindest einen steuerbaren Schaltventil zu schalten. Die Steuerung kann auch weitere Funktionen des Fahrantriebs und einer Hebevorrichtung steuern.

Die Steuerung kann grundsätzlich wenigstens eine Recheneinheit und wenigstens eine Speichereinheit aufweisen. Die Recheneinheit kann mit der Speichereinheit in einer Datenverbindung stehen oder in eine solche bringbar sein. Die Steuerung kann beispielsweise an einer Hebevorrichtung angeordnet oder anordenbar sein.

Die Steuerung kann über mehrere Signaleingänge verfügen, welchen Sensorsignale zumindest eines im Fahrantrieb verbauten Sensors zur Erfassung zumindest eines Betriebsparameters des Fahrantriebs zugeführt werden können. Die Sensorsignale können in Form von Sensordaten in einer Speichereinheit der Steuerung abgespeichert werden. Auf Basis der Sensordaten können von der Steuerung Steuersignale für die Ansteuerung des Fahrantriebs generiert und ausgegeben werden. Die Steuerung kann eine Benutzerschnittstelle mit zumindest einem Bedienelement zur Abgabe von Bedienbefehlen durch einen Benutzer aufweisen. Auf Basis der Bedienbefehle können von der Steuerung Steuersignale für die Ansteuerung des Fahrantriebs generiert und ausgegeben werden.

Grundsätzlich kann mit dem zumindest einen steuerbaren Schaltventil eine wahlweise Versorgung zumindest eines Hydraulikmotors mit Hydraulikfluids gesteuert werden. Insbesondere kann mit dem zumindest einen steuerbaren Schaltventil eine Versorgung zumindest eines Hydraulikmotors mit Hydraulikfluids wahlweise freigeschaltet oder abgeschaltet werden.

Zum zumindest teilweisen Abschalten zumindest eines Hydraulikmotors kann mit einem Steuersignal ein Schaltzustand des zumindest einen in einer Fluidleitung zwischen der Pumpe und dem zumindest einen zumindest teilweise abzuschaltenden Hydraulikmotor angeordneten steuerbaren Schaltventils in einen zumindest teilweise fluidsperrenden Schaltzustand geschalten werden. Dies kann mit einem Steuersignal zum zumindest teilweisen Abschalten zumindest eines Hydraulikmotors erfolgen.

Ein zumindest teilweises Abschalten zumindest eines Hydraulikmotors kann ein Antriebsdrehmoment eines damit angetriebenen Antriebsrads verringern. Eine Verringerung eines Antriebsdrehmoments kann im Wesentlichen ohne zusätzliche Leistungsverluste und damit im Wesentlichen ohne verringerte Effizienz erfolgen.

Ein zumindest teilweises Abschalten zumindest eines Hydraulikmotors kann erfolgen, wenn das entsprechende Antriebsrad einen Schlupf gegenüber dem befahrenen Untergrund aufweist oder aufzuweisen droht.

Zum zumindest teilweisen Zuschalten zumindest eines Hydraulikmotors kann mit einem Steuersignal einen Schaltzustand des zumindest einen in einer Fluidleitung zwischen der Pumpe und dem zumindest einen zumindest teilweise zuzuschaltenden Hydraulikmotor angeordneten steuerbaren Schaltventils in einen zumindest teilweise fluidleitenden Schaltzustand geschalten werden. Dies kann mit einem Steuersignal zum zumindest teilweisen Zuschalten zumindest eines Hydraulikmotors erfolgen.

Ein zumindest teilweises Zuschalten zumindest eines Hydraulikmotors kann nach einem zumindest teilweisen Abschalten des zumindest einen Hydraulikmotors erfolgen.

Ein zumindest teilweises Zuschalten zumindest eines Hydraulikmotors kann ein Antriebsdrehmoment eines damit angetriebenen Antriebsrads erhöhen. Eine Erhöhung eines Antriebsdrehmoments kann im Wesentlichen ohne zusätzliche Leistungsverluste und damit im Wesentlichen ohne verringerte Effizienz erfolgen.

Ein zumindest teilweises Zuschalten zumindest eines Hydraulikmotors kann erfolgen, wenn das entsprechende Antriebsrad keinen Schlupf gegenüber dem befahrenen Untergrund aufweist.

Bei einer Ausführung des zumindest einen Schaltventils mit einer wie zuvor beschriebenen "open center" Zwischenstellung kann mit einem Steuersignal zum zumindest teilweisen Zuschalten oder Abschalten ein Schaltventil in einen die Eingangsseite und die Ausgangsseiten des Schaltventils zumindest teilweise miteinander fluidleitend verbundenen Schaltzustand geschaltet werden.

Ein zumindest teilweises Abschalten und ein zumindest teilweises Zuschalten zumindest eines Hydraulikmotors kann bei einer Ausführung mit mehreren Hydraulikmotoren einzeln oder in Kombination erfolgen. So können einzelne oder mehrere Hydraulikmotoren zumindest teilweise abgeschaltet werden und/oder einzelne oder mehrere Hydraulikmotoren zumindest teilweise zugeschaltet werden.

Mit dem zumindest einen steuerbaren Schaltventil kann eine Verteilung des von der Pumpe geförderten Hydraulikfluids zu den Hydraulikmotoren des Fahrantriebs gesteuert werden.

Bei einer Ausführung eines Fahrantriebs mit zwei durch die Pumpe mit Hydraulikfluid antreibbaren Hydraulikmotoren, von welchen einer der Hydraulikmotoren in einer Fluidleitung zwischen der Pumpe dem Hydraulikmotor ein steuerbares Schaltventil aufweist, kann durch das steuerbare Schaltventil ein Antrieb beider Hydraulikmotoren oder ein Antrieb eines einzelnen Hydraulikmotors erfolgen. Für eine konstante Förderrate der Pumpe kann der Fluss zwischen den zwei Hydraulikmotoren aufgeteilt werden oder einem einzelnen Hydraulikmotor zugeführt werden.

Bei einer Ausführung eines Fahrantriebs mit drei durch die Pumpe mit Hydraulikfluid antreibbaren Hydraulikmotoren, von welchen zwei der Hydraulikmotoren in einer Fluidleitung zwischen der Pumpe und den zwei Hydraulikmotoren zumindest ein steuerbares Schaltventil aufweisen, kann durch das zumindest eine steuerbare Schaltventil ein Antrieb eines einzelnen Hydraulikmotors, ein Antrieb von zwei Hydraulikmotoren oder ein Antrieb aller drei Hydraulikmotoren erfolgen. Für eine gegebene Förderrate der Pumpe kann der Fluss entsprechend zwischen den Hydraulikmotoren aufgeteilt werden.

Das zumindest eine Steuersignal kann durch die Steuerung in Abhängigkeit eines von einem Benutzer über eine Benutzerschnittstelle der Steuerung abgegebenen Bedienbefehls ausgebbar sein. Ein Benutzer kann durch Interaktion mit einer Benutzerschnittstelle der Steuerung zumindest einen Hydraulikmotor des Fahrantriebs zumindest teilweise Zuschalten oder zumindest teilweise Abschalten. Die Steuerung kann dazu eine Benutzerschnittstelle mit zumindest einem Bedienelement zur Abgabe von Bedienbefehlen durch einen Benutzer aufweisen, wobei auf Basis der Bedienbefehle von der Steuerung Steuersignale zum zumindest teilweisen Abschalten und Steuersignale zum zumindest teilweisen Zuschalten generierbar und an das zumindest eine steuerbare Schaltventil ausgebbar sind.

Bei einer Ausführung eines Fahrantriebs mit drei durch die Pumpe mit Hydraulikfluid antreibbaren Hydraulikmotoren, von welchen zwei der Hydraulikmotoren in einer Fluidleitung zwischen der Pumpe und den zwei Hydraulikmotoren zumindest ein steuerbares Schaltventil aufweisen, kann ein Benutzer zwischen einem Antrieb eines einzelnen Hydraulikmotors, einem Antrieb von zwei Hydraulikmotoren oder einem Antrieb aller drei Hydraulikmotoren umschalten.

In einer vorteilhaften Ausführung kann das zumindest eine Steuersignal durch die Steuerung in Abhängigkeit zumindest eines durch die Steuerung erfassten Betriebsparameters des Fahrantriebs ausgebbar sein. Der Steuerung können zur Erfassung zumindest eines Betriebsparameters Sensorsignale zumindest eines im Fahrantrieb verbauten Sensors zugeführt werden, wobei auf Basis der erfassten Sensorsignale von der Steuerung Steuersignale zum zumindest teilweisen Abschalten und Steuersignale zum zumindest teilweisen Abschalten generierbar und an das zumindest eine steuerbare Schaltventil ausgebbar sind.

Bei einer Ausführung eines Fahrantriebs mit drei durch die Pumpe mit Hydraulikfluid antreibbaren Hydraulikmotoren, von welchen zwei der Hydraulikmotoren in einer Fluidleitung zwischen der Pumpe und den zwei Hydraulikmotoren zumindest ein steuerbares Schaltventil aufweisen, kann eine entsprechend ausgebildete Steuerung in Abhängigkeit zumindest eines durch die Steuerung erfassten Betriebsparameters zwischen einem Antrieb eines einzelnen Hydraulikmotors, einem Antrieb von zwei Hydraulikmotoren oder einem Antrieb aller drei Hydraulikmotoren umschalten.

Der zumindest eine durch die Steuerung erfasste Betriebsparameter kann ein zumindest an einer Ausgangsseite der Pumpe durch einen Drucksensor erfasster Hydraulikdruck sein. Der zumindest eine Drucksensor kann zwischen der Pumpe und dem Hydraulikmotor angeordnet sein. Vorzugsweise kann der zumindest eine Drucksensor zwischen der Pumpe und einem Schaltventil angeordnet sein.

Die Steuerung kann dazu ausgebildet sein, in Abhängigkeit des erfassten Hydraulikdrucks mit einem Steuersignal einen Schaltzustand zumindest eines steuerbaren Schaltventils zu steuern.

Bei einem Unterschreiten eines vorgegebenen oder vorgebbaren Grenzwerts des erfassten Hydraulikdrucks kann mit dem Steuersignal zum zumindest teilweisen Abschalten zumindest eines Hydraulikmotors ein Schaltzustand des zumindest einen in einer Fluidleitung zwischen der Pumpe und dem zumindest einen zumindest teilweise abzuschaltenden Hydraulikmotor angeordneten steuerbaren Schaltventils in einen zumindest teilweise fluidsperrenden Schaltzustand schaltbar sein.

Bei einem Überschreiten eines vorgegebenen oder vorgebbaren Grenzwerts des erfassten Hydraulikdrucks kann mit dem Steuersignal zum zumindest teilweisen Zuschalten zumindest eines Hydraulikmotors ein Schaltzustand des zumindest einen in einer Fluidleitung zwischen der Pumpe und dem zumindest einen zumindest teilweise zuzuschaltenden Hydraulikmotor angeordneten steuerbaren Schaltventils in einen zumindest teilweise fluidleitenden Schaltzustand schaltbar sein.

Ein Unterschreiten eines vorgegebenen oder vorgebbaren Grenzwerts des erfassten Hydraulikdrucks kann beispielsweise erfolgen, wenn zumindest eines der angetriebenen Antriebsräder einen Schlupf gegenüber dem befahrenen Untergrund aufweist. Dabei kann eine durch ein Antriebsdrehmoment des angetriebenen Antriebsrads aufgebrachte Kraft eine durch die Haftreibung des Antriebsrads zum Untergrund gegebene Kraft übersteigen. Ein solcher Schlupf kann durch eine Erfassung eines Abfalls des Hydraulikdrucks an einer Ausgangsseite der Pumpe erfassbar sein.

Ein Unterschreiten eines vorgegebenen oder vorgebbaren Grenzwerts des erfassten Hydraulikdrucks kann beispielsweise erfolgen, wenn ein mit einem Fahrantrieb angetriebenes Fahrzeug einen Untergrund mit einem Gefälle und/oder einen Untergrund mit geringerem Rollwiderstand befährt. Dabei kann eine verringerte durch ein Antriebsdrehmoment des angetriebenen Antriebsrads aufzubringende Antriebskraft vorliegen. Eine solche verringerte aufzubringende Antriebskraft kann durch eine Erfassung eines Abfalls des Hydraulikdrucks an einer Ausgangsseite der Pumpe erfassbar sein.

Ein Überschreiten eines vorgegebenen oder vorgebbaren Grenzwerts des erfassten Hydraulikdrucks kann beispielsweise erfolgen, wenn ein für eine Fahrbewegung des Fahrantriebs benötigtes Antriebsdrehmoment der angetriebenen Antriebsräder einen vorgegebenen oder vorgebbaren Grenzwert des dafür aufzubringenden Hydraulikdrucks übersteigt. Ein solcher Druckanstieg kann durch eine Erfassung eines Anstiegs des Hydraulikdrucks an einer Ausgangsseite der Pumpe erfassbar sein.

Ein Überschreiten eines vorgegebenen oder vorgebbaren Grenzwerts des erfassten Hydraulikdrucks kann beispielsweise erfolgen, wenn ein mit dem Fahrantrieb angetriebenes Fahrzeug einen Untergrund mit einer Steigung und/oder einen Untergrund mit erhöhtem Rollwiderstand befährt. Dabei kann eine erhöhte durch ein Antriebsdrehmoment des angetriebenen Antriebsrads aufzubringende Antriebskraft vorliegen. Eine solche erhöhte aufzubringende Antriebskraft kann durch eine Erfassung eines Anstiegs des Hydraulikdrucks an einer Ausgangsseite der Pumpe erfassbar sein.

Bei einer Ausführung eines Fahrantriebs mit drei durch die Pumpe mit Hydraulikfluid antreibbaren Hydraulikmotoren, von welchen zwei der Hydraulikmotoren in einer Fluidleitung zwischen der Pumpe und den zwei Hydraulikmotoren zumindest ein steuerbares Schaltventil aufweisen, kann eine entsprechend ausgebildete Steuerung in Abhängigkeit zumindest eines durch die Steuerung erfassten Hydraulikdrucks an einer Ausgangsseite der Pumpe zwischen einem Antrieb eines einzelnen Hydraulikmotors, einem Antrieb von zwei Hydraulikmotoren oder einem Antrieb aller drei Hydraulikmotoren umschalten. Besonders bevorzugt kann eine entsprechend ausgebildete Steuerung in Abhängigkeit zumindest eines durch die Steuerung erfassten Hydraulikdrucks an einer Ausgangsseite der Pumpe zwischen einem Antrieb eines einzelnen Hydraulikmotors und einem Antrieb aller drei Hydraulikmotoren umschalten.

In einer vorteilhaften Ausführung kann der zumindest eine durch die Steuerung erfasste Betriebsparameter eine Druckdifferenz, also ein relativ gemessener Hydraulikdruck, zwischen einem an einer Ausgangsseite der Pumpe durch einen Drucksensor erfassten Hydraulikdruck und einem an einer Eingangsseite der Pumpe durch einen Drucksensor erfassten Hydraulikdruck sein.

Die mit Hydraulikfluid antreibbaren Hydraulikmotoren können eine Eingangsseite und eine Ausgangsseite aufweisen, welche vorteilhaft über das Schaltventil zumindest teilweise fluidleitenden miteinander verbindbar sind. Insbesondere in dem zumindest teilweise fluidsperrenden Schaltzustand des zumindest einen in der Fluidleitung zwischen der Pumpe und dem zumindest einen zumindest teilweise abzuschaltenden Hydraulikmotor angeordneten steuerbaren Schaltventils können die Eingangsseite und die Ausgangsseite des zumindest einen zumindest teilweise abzuschaltenden Hydraulikmotors über das Schaltventil zumindest teilweise fluidleitenden miteinander verbunden sein.

Eine zumindest teilweise fluidleitende Verbindung kann über das Schaltventil erfolgen, wobei das Schaltventil daran angeschlossene, in der entsprechenden Schaltstellung die Eingangsseite und die Ausgangsseite des zumindest einen zumindest teilweise abzuschaltenden Hydraulikmotors verbindende Verbindungsleitungen aufweisen kann. Eine zumindest teilweise fluidleitende Verbindung kann durch das Schaltventil selbst erfolgen, wobei das Schaltventil die Eingangsseite und die Ausgangsseite des zumindest einen zumindest teilweise abzuschaltenden Hydraulikmotors verbindende Fluidleitungen aufweisen kann.

Durch eine zumindest teilweise fluidleitende Verbindung der Eingangsseite und der Ausgangsseite eines von der Hydraulikfluidversorgung zumindest teilweise abgeschalteten Hydraulikmotors kann ein Antriebsdrehmoment des angetriebenen Antriebsrads verringert werden. Durch eine zumindest fluidleitende Verbindung der Eingangsseite und der Ausgangsseite eines von der Hydraulikfluidversorgung abgeschalteten Hydraulikmotors kann eine passive Drehung, oder in anderen Worten ein Mitschleppen, des zugehörigen Antriebsrads in einem Fahrbetrieb des Fahrantriebs erfolgen.

In einer vorteilhaften Ausführung kann der Fahrantrieb drei mit Hydraulikfluid antreibbare Hydraulikmotoren zum Einzelradantrieb von drei Antriebsrädern aufweisen. Der Fahrantrieb kann für zwei der Hydraulikmotoren zumindest ein in der Fluidleitung zwischen der Pumpe und den zwei Hydraulikmotoren angeordnetes steuerbares Schaltventil aufweisen. Dabei können für die zwei Hydraulikmotoren einzelne steuerbare Schaltventile oder ein gemeinsames steuerbares Schaltventil vorgesehen sein.

Für eine solche Ausführung kann das zumindest eine Steuersignal durch die Steuerung in Abhängigkeit zumindest eines durch die Steuerung an einer Ausgangsseite der Pumpe durch einen Drucksensor erfassten Hydraulikdrucks ausgebbar sein, wobei
- bei einem Unterschreiten eines vorgegebenen oder vorgebbaren Grenzwerts des erfassten Hydraulikdrucks mit dem Steuersignal zum zumindest teilweisen Abschalten zumindest eines der zwei Hydraulikmotoren ein Schaltzustand des zumindest einen in einer Fluidleitung zwischen der Pumpe und dem zumindest einen zumindest teilweise abzuschaltenden Hydraulikmotor angeordneten steuerbaren Schaltventils in einen zumindest teilweise fluidsperrenden Schaltzustand schaltbar ist und/oder
- bei einem Überschreiten eines vorgegebenen oder vorgebbaren Grenzwerts des erfassten Hydraulikdrucks mit dem Steuersignal zum zumindest teilweisen Zuschalten zumindest eines der zwei Hydraulikmotoren ein Schaltzustand des zumindest einen in einer Fluidleitung zwischen der Pumpe und dem zumindest einen zumindest teilweise zuzuschaltenden Hydraulikmotor angeordneten steuerbaren Schaltventils in einen zumindest teilweise fluidleitenden Schaltzustand schaltbar ist.

Für eine solche Ausführung kann in Abhängigkeit des erfassten Hydraulikdrucks ein Antrieb eines einzelnen Hydraulikmotors, ein Antrieb von zwei Hydraulikmotoren oder ein Antrieb aller drei Hydraulikmotoren erfolgen. Für eine konstante Förderrate der Pumpe kann der Fluss entsprechend zwischen den Hydraulikmotoren aufgeteilt werden. Besonders bevorzugt kann eine entsprechend ausgebildete Steuerung in Abhängigkeit zumindest eines durch die Steuerung erfassten Hydraulikdrucks an einer Ausgangsseite der Pumpe zwischen einem Antrieb eines einzelnen Hydraulikmotors und einem Antrieb aller drei Hydraulikmotoren umschalten.

In einer vorteilhaften Ausführung kann der Fahrantrieb eine hydraulische Differentialsperre aufweisen. Ein solcher Fahrantrieb kann wie zuvor beschrieben zwischen einem Antrieb eines einzelnen Hydraulikmotors, einem Antrieb von zwei oder Hydraulikmotoren, einem Antrieb aller Hydraulikmotoren, und einem Antrieb, bei welchem die Regelung des Flusses des Hydraulikfluids mittels einer solchen hydraulischen Differentialsperre erfolgt, umschalten.

Schutz wird auch begehrt für ein Verfahren zur Versorgung eines zumindest zwei Hydraulikmotoren zum Einzelradantrieb von Antriebsrädern aufweisenden, wie zuvor beschriebenen Fahrantriebs einer Hebevorrichtung mit Hydraulikfluid. Besonders bevorzugt kann das Verfahren zur Versorgung eines drei Hydraulikmotoren zum Einzelradantrieb von Antriebsrädern aufweisenden, wie zuvor beschriebenen Fahrantriebs einer Hebevorrichtung mit Hydraulikfluid ausgeführt sein.

Bei dem Verfahren kann ein Fördern von Hydraulikfluid durch eine Pumpe zur Versorgung der Hydraulikmotoren des Fahrantriebs mit Hydraulikfluid erfolgen.

In Abhängigkeit zumindest eines durch die Steuerung ausgegebenen Steuersignals kann ein Steuern eines Schaltzustands zumindest eines in einer Fluidleitung zwischen der Pumpe und zumindest einem der Hydraulikmotoren angeordneten schaltbaren Schaltventils erfolgen.

Dabei kann mit einem Steuersignal zum zumindest teilweisen Abschalten zumindest eines Hydraulikmotors ein Schaltzustand des zumindest einen in einer Fluidleitung zwischen der Pumpe und dem zumindest einen zumindest teilweise abzuschaltenden Hydraulikmotor angeordneten steuerbaren Schaltventils in einen zumindest teilweise fluidsperrenden Schaltzustand geschalten werden.

Mit dem Steuersignal zum zumindest teilweisen Zuschalten zumindest eines Hydraulikmotors kann ein Schaltzustand des zumindest einen in einer Fluidleitung zwischen der Pumpe und dem zumindest einen zumindest teilweise zuzuschaltenden Hydraulikmotor angeordneten steuerbaren Schaltventils in einen zumindest teilweise fluidleitenden Schaltzustand geschalten werden.

In einer vorteilhaften Ausführung des Verfahrens kann eine Ausgabe des zumindest einen Steuersignals durch die Steuerung in Abhängigkeit eines von einem Benutzer über eine Benutzerschnittstelle der Steuerung abgegebenen Bedienbefehls erfolgen.

Alternativ oder in Kombination kann durch die Steuerung ein Erfassen zumindest eines Betriebsparameters des Fahrantriebs erfolgen, wobei eine Ausgabe des zumindest einen Steuersignals durch die Steuerung in Abhängigkeit des zumindest einen erfassten Betriebsparameters erfolgen kann.

Dabei kann durch die Steuerung ein Erfassen zumindest eines an einer Ausgangsseite der Pumpe durch einen Drucksensor erfassten Hydraulikdrucks erfolgen.

Bei einem Unterschreiten eines vorgegebenen oder vorgebbaren Grenzwerts des erfassten Hydraulikdrucks kann mit dem Steuersignal zum zumindest teilweisen Abschalten zumindest eines Hydraulikmotors ein Schalten des zumindest einen in einer Fluidleitung zwischen der Pumpe und dem zumindest teilweise abzuschaltenden Hydraulikmotor angeordneten steuerbaren Schaltventils in einen zumindest teilweise fluidsperrenden Schaltzustand erfolgen.

Bei einem Überschreiten eines vorgegebenen oder vorgebbaren Grenzwerts des erfassten Hydraulikdrucks kann mit dem Steuersignal zum zumindest teilweisen Zuschalten zumindest eines Hydraulikmotors ein Schalten des zumindest einen in einer Fluidleitung zwischen der Pumpe und dem zumindest teilweise zuzuschaltenden Hydraulikmotor angeordneten steuerbaren Schaltventils in einen zumindest teilweise fluidleitenden Schaltzustand erfolgen.

Schutz wird auch begehrt für Hebevorrichtung mit einem wie zuvor beschriebenen Fahrantrieb.

Die Hebevorrichtung kann als Gabelstapler ausgeführt sein. Ein Fahrantrieb einer solchen als Gabelstapler ausgeführten Hebevorrichtung kann drei mit Hydraulikfluid antreibbare Hydraulikmotoren zum Einzelradantrieb von drei Antriebsrädern aufweisen. Dabei kann der Fahrantrieb zwei antreibbare Vorderräder und ein antreibbares Hinterrad aufweisen. Für die zwei Hydraulikmotoren der antreibbaren Vorderräder kann zumindest ein in der Fluidleitung zwischen der Pumpe und den zwei Hydraulikmotoren angeordnetes steuerbares Schaltventil vorgesehen sein. Dabei können für die zwei Hydraulikmotoren einzelne steuerbare Schaltventile oder ein gemeinsames steuerbares Schaltventil vorgesehen sein. Durch das zumindest eine steuerbare Schaltventil kann ein Antrieb eines einzelnen Hydraulikmotors des Hinterrades, ein Antrieb eines Hydraulikmotors des Hinterrades und eines der Hydraulikmotoren der Vorderräder, oder ein Antrieb aller drei Hydraulikmotoren erfolgen. Durch ein gemeinsames steuerbares Schaltventil kann ein Antrieb eines einzelnen Hydraulikmotors des Hinterrades oder ein Antrieb aller drei Hydraulikmotoren erfolgen.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigt:
- Fig. 1a bis 1c: eine erste Ausführung eines Fahrantriebs
- Fig. 2a bis 2c: eine zweite Ausführung eines Fahrantriebs
- Fig. 3a bis 3c: eine dritte Ausführung eines Fahrantriebs
- Fig. 4: eine Ausführung eines Hydraulikmotors
- Fig. 5a und 5b: eine Ausführung einer Hebevorrichtung in Form eines Gabelstaplers
- Fig. 6: einen schematischen Ablauf eines Verfahrens

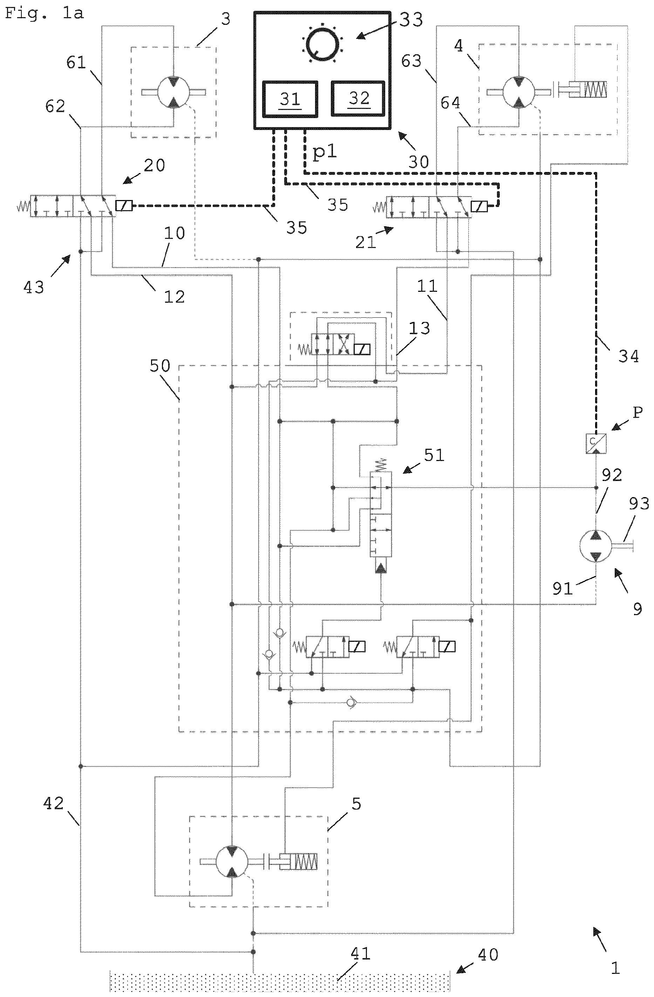

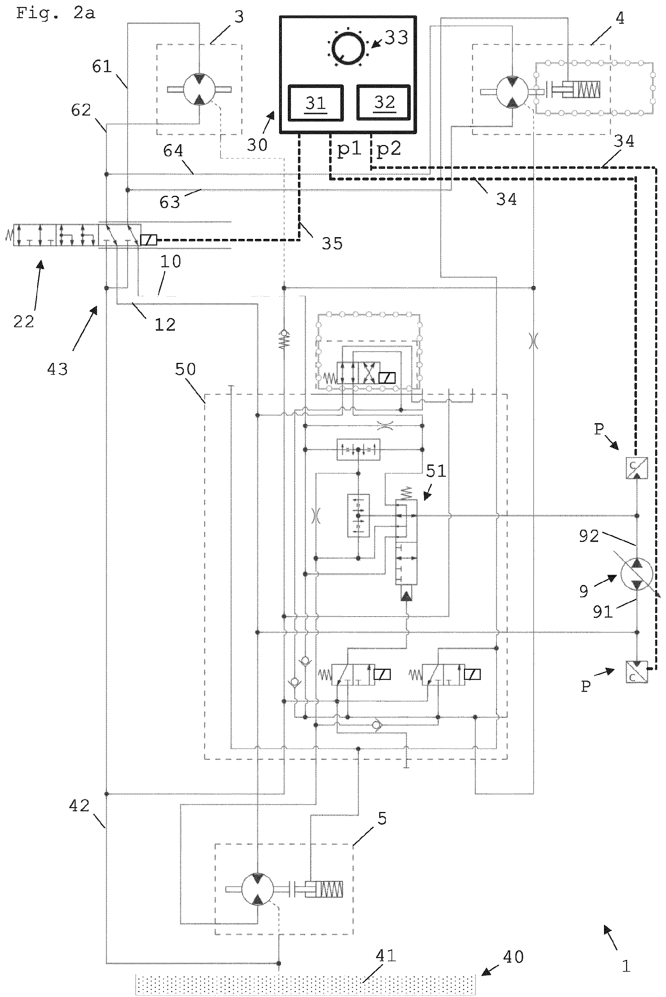

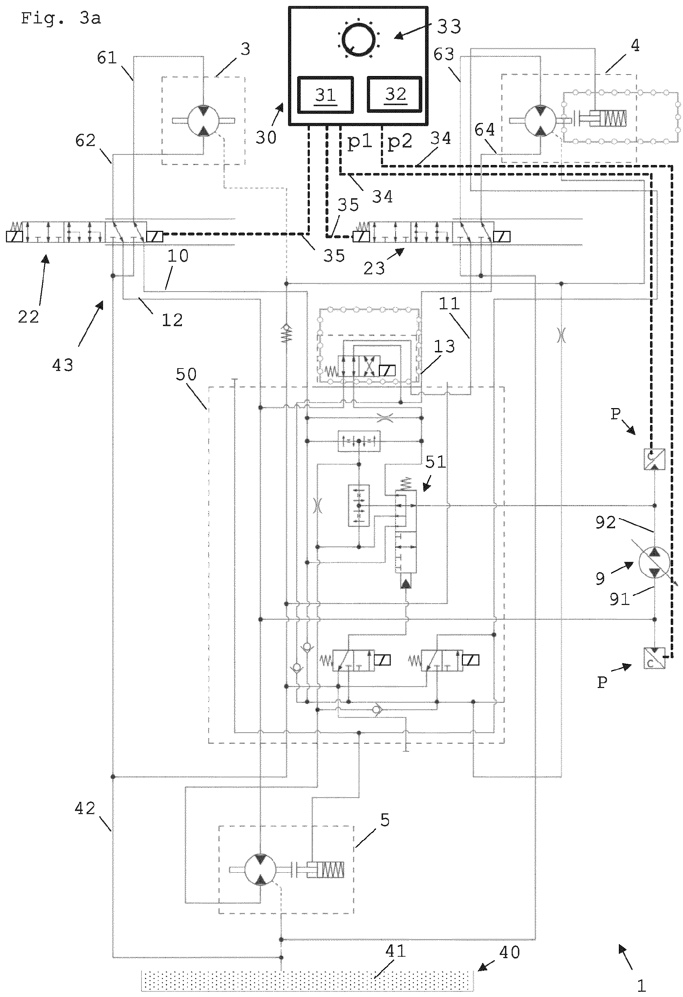

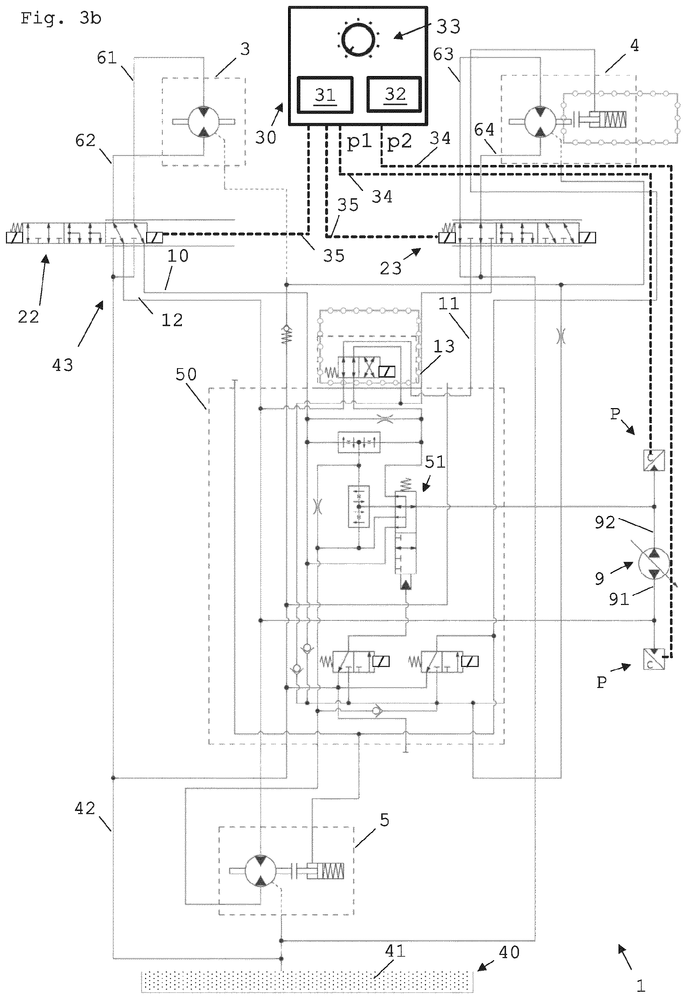

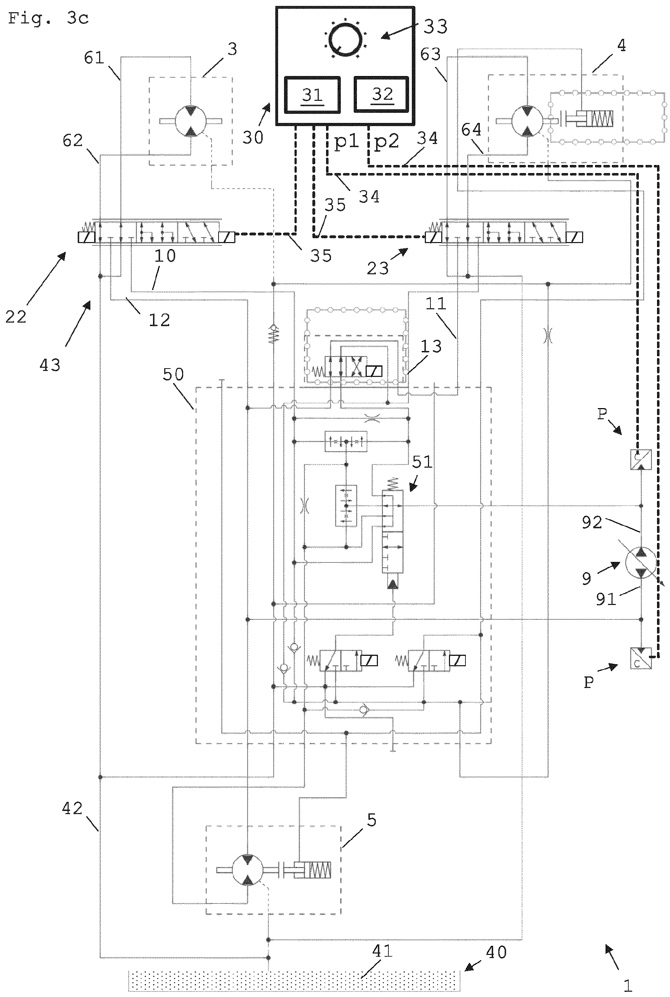

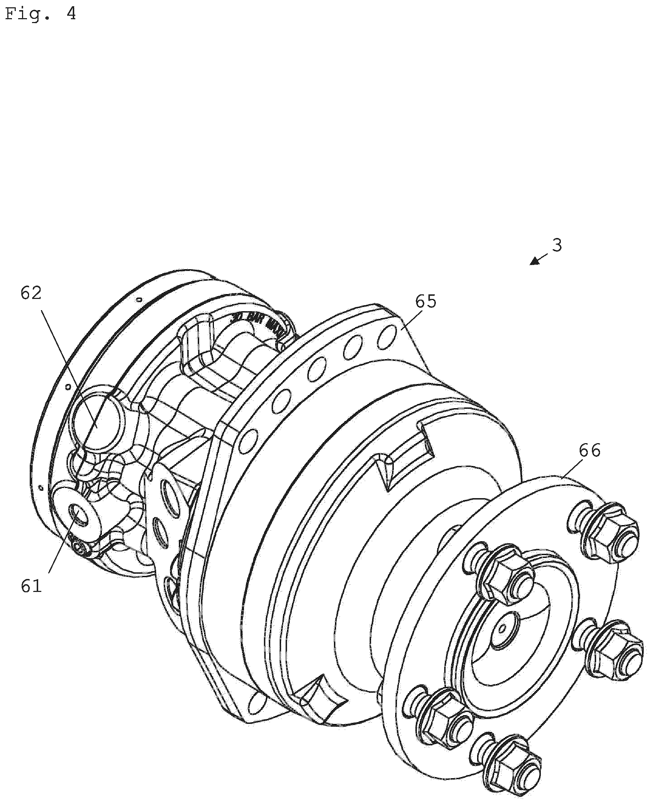

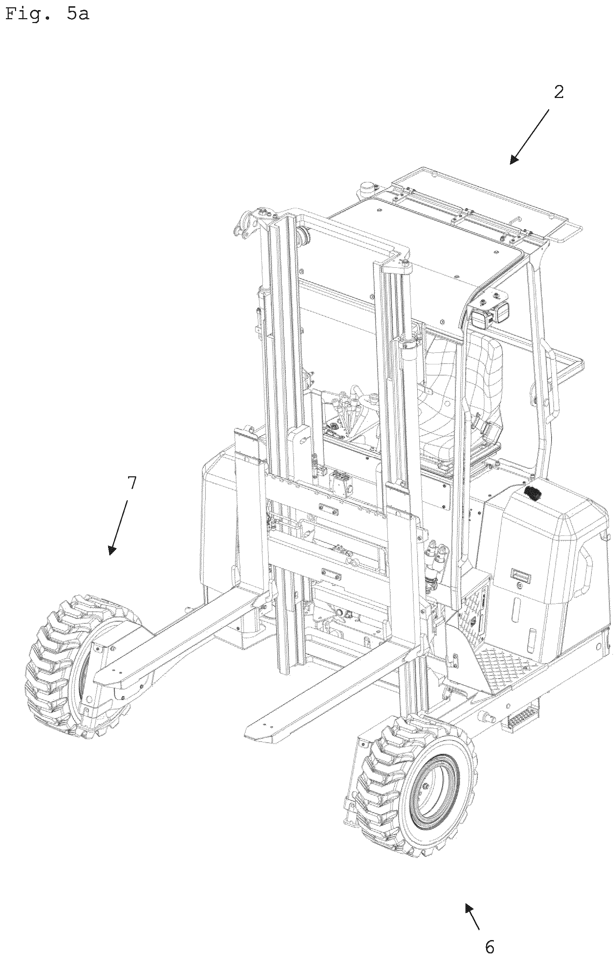

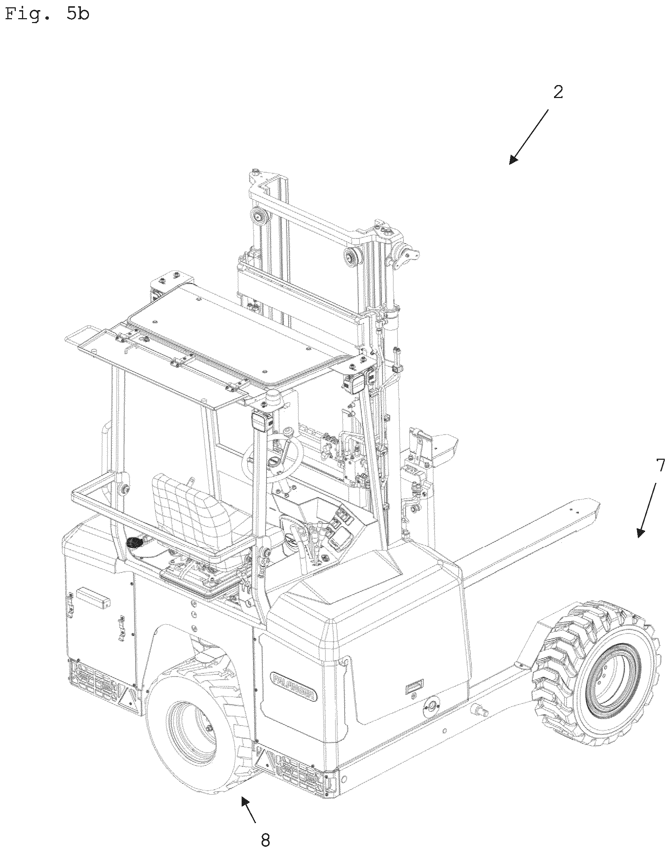

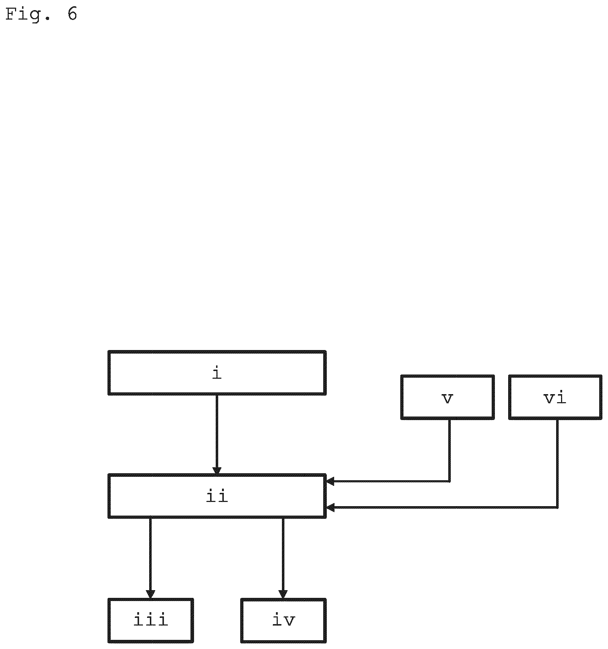

In den Figuren 1a bis 1c ist eine erste Ausführung eines Fahrantriebs 1 mit drei mit Hydraulikfluid 41 antreibbaren Hydraulikmotoren 3, 4, 5 gezeigt, wobei für zwei der Hydraulikmotoren 3, 4 steuerbare Schaltventile 20, 21 vorgesehen sind. In den Figuren 2a bis 2c ist eine zweite Ausführung eines Fahrantriebs 1 mit drei mit Hydraulikfluid 41 antreibbaren Hydraulikmotoren 3, 4, 5 gezeigt, wobei für zwei der Hydraulikmotoren 3, 4 ein gemeinsames steuerbares Schaltventil 22 vorgesehen ist. In den Figuren 3a bis 3c ist eine dritte Ausführung eines Fahrantriebs 1 mit drei mit Hydraulikfluid 41 antreibbaren Hydraulikmotoren 3, 4, 5 gezeigt, wobei für zwei der Hydraulikmotoren 3, 4 steuerbare Schaltventile 22, 23 vorgesehen sind. In Figur 4 ist eine Ausführung eines Hydraulikmotors 3 gezeigt. Die Fahrantriebe 1 sind für eine wie in den Figuren 5a und 5b gezeigte Ausführung einer Hebevorrichtung 2 mit drei einzeln angetriebenen Antriebsrädern 6, 7, 8 geeignet. In Figur 6 ist schematisch der Ablauf einer vorteilhaften Ausführung eines Verfahrens zur Versorgung eines Hydraulikmotoren 3, 4, 5 zum Einzelradantrieb von Antriebsrädern 6, 7, 8 aufweisenden Fahrantriebs 1 einer Hebevorrichtung 2 gezeigt.

In den Figuren 1a bis 1c ist eine erste Ausführung eines Fahrantriebs 1 mit drei mit Hydraulikfluid 41 antreibbaren Hydraulikmotoren 3, 4, 5 gezeigt, welche zum Einzelradantrieb von Antriebsrädern 6, 7, 8 (siehe Figuren 5a und 5b) geeignet sind. Der Fahrantrieb weist einer Pumpe 9 zur Versorgung der Hydraulikmotoren 3, 4, 5 mit Hydraulikfluid 41 aus einem Hydrauliktank 40 auf. Die Pumpe 9 ist über eine mechanische Verbindung 90, wie etwa einen Antriebsschaft, ein Getriebe, einen Riementrieb und/oder eine Kupplung, von einem Motor antreibbar.

In den zwischen der Pumpe 9 und den zwei Hydraulikmotoren 3, 4 verlaufenden und zu den Eingangsseiten 61, 63 verlaufenden Fluidleitungen 10, 11 und den von den Ausgangsseiten 62, 64 verlaufenden Fluidleitungen 12, 13 ist jeweils ein mit einem Steuersignal steuerbares Schaltventil 20, 21 angeordnet. Zumindest eine zum Steuern der Schaltventile 20, 21 ausgebildete Steuerung 30 mit zumindest einer Recheneinheit 31 und zumindest einer Speichereinheit 32 ist mit Steuerleitungen 35 mit den Schaltventilen 20, 21 verbunden.

Die Schaltventile 20, 21 sind jeweils an einer Eingangsseite 61, 63 und einer Ausgangsseite 62, 64 der Hydraulikmotoren 3, 4 angeordnet.

Dabei sind die zu und von den Hydraulikmotoren 3, 4 verlaufenden Hydraulikleitungen 10, 12, 11, 13 an Eingangsseiten der Schaltventile 20, 21 angeschlossen und die Eingangsseiten 61, 63 und Ausgangsseiten 62, 64 der Hydraulikmotoren 3, 4 an einer Ausgangsseite der Schaltventile 20, 21 angeschlossen.

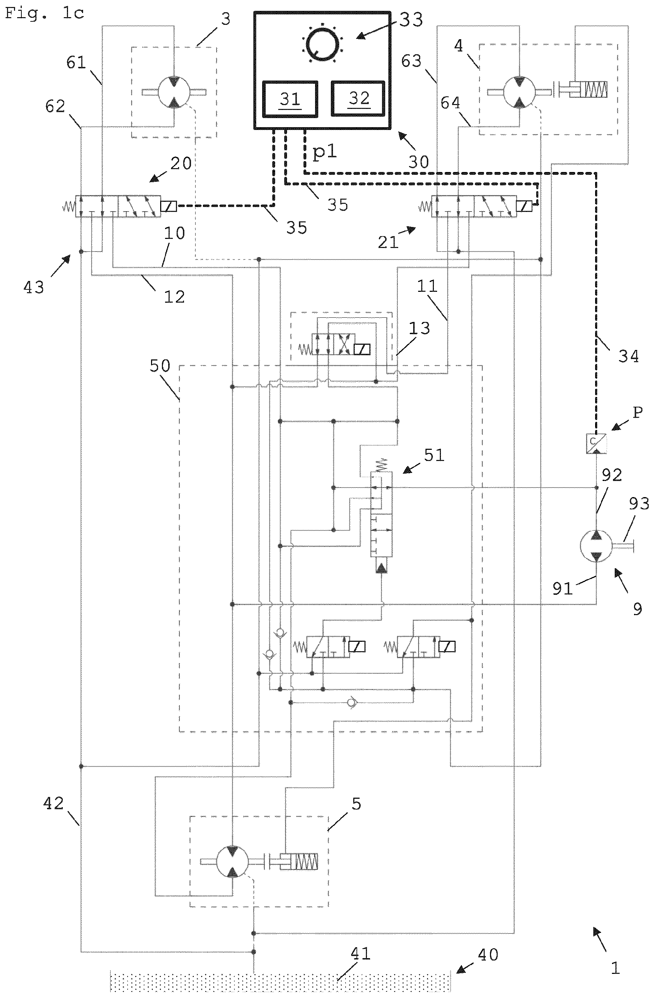

Die steuerbaren Schaltventile 20, 21 sind zumindest zwischen einem zumindest teilweise fluidsperrenden Schaltzustand (siehe speziell Figur 1c) und einem zumindest teilweise fluidleitenden Schaltzustand (siehe speziell Figur 1a) schaltbar. Die Schaltventile 20, 21 können als Ventile mit diskreten Schaltzuständen ausgeführt sein oder als Proportionalventile ausgeführt sein.

Die in den Figuren gezeigten Fahrantriebe 1 weisen ein hydraulische Differentialsperre 50 auf, welche jedoch mit dem Schaltventil 51 deaktiviert ist.

Durch einen wie in Figur 1a konfigurierten Fahrantrieb 1, bei welchem sich die steuerbaren Schaltventile 20, 21 in einem fluidleitenden Schaltzustand befinden, kann ein Antrieb von drei Hydraulikmotoren 3, 4, 5 erfolgen.

Mit einem Steuersignal zum zumindest teilweisen Abschalten zumindest eines der zwei Hydraulikmotoren 3, 4 kann ein Schaltzustand zumindest eines der steuerbaren Schaltventile 20, 21 in einen zumindest teilweise fluidsperrenden Schaltzustand schaltbar sein.

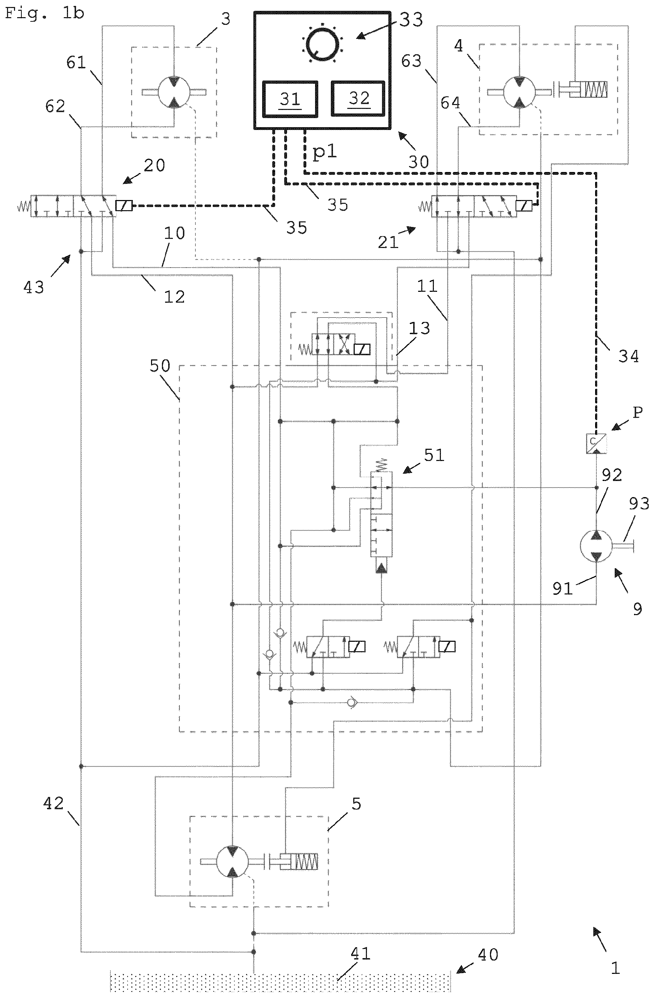

Bei einem Übergang der Figur 1a zu Figur 1b wird das dem Hydraulikmotor 4 zugeordnete Schaltventil 21 in einen fluidsperrenden Schaltzustand geschaltet. Durch einen so konfigurierten Fahrantrieb 1 kann ein Antrieb von zwei Hydraulikmotoren 3, 5 erfolgen.

Bei einem Übergang der Figur 1b zu Figur 1c wird auch das dem Hydraulikmotor 3 zugeordnete Schaltventil 20 in einen fluidsperrenden Schaltzustand geschaltet. Durch einen so konfigurierten Fahrantrieb 1 kann ein Antrieb eines einzelnen Hydraulikmotors 5 erfolgen.

Bei einem Übergang der Figur 1a zu Figur 1c werden das dem Hydraulikmotor 3 zugeordnete Schaltventil 20 und auch das dem Hydraulikmotor 4 zugeordnete Schaltventil 21 jeweils in einen fluidsperrenden Schaltzustand geschaltet. Durch einen so konfigurierten Fahrantrieb 1 kann ein Antrieb eines einzelnen Hydraulikmotors 5 erfolgen.

Mit einem Steuersignal zum zumindest teilweisen Zuschalten zumindest eines Hydraulikmotors 3, 4 kann ein Schaltzustand zumindest eines der steuerbaren Schaltventile 20, 21 in einen zumindest teilweise fluidleitenden Schaltzustand schaltbar sein.

Beispielsweise kann bei einem Übergang der Figur 1c zu Figur 1b das dem Hydraulikmotor 3 zugeordnete Schaltventil 20 in einen fluidleitenden Schaltzustand geschaltet werden. Durch einen so konfigurierten Fahrantrieb 1 kann wieder ein Antrieb von zwei Hydraulikmotoren 3, 5 erfolgen.

Bei einem Übergang der Figur 1c zu Figur 1a werden das dem Hydraulikmotor 3 zugeordnete Schaltventil 20 und auch das dem Hydraulikmotor 4 zugeordnete Schaltventil 21 jeweils in einen fluidleitenden Schaltzustand geschaltet. Durch einen so konfigurierten Fahrantrieb 1 kann wieder ein Antrieb von drei Hydraulikmotoren 3, 4, 5 erfolgen.

Zumindest ein wie zuvor beschriebenes Steuersignal kann durch die Steuerung 30 in Abhängigkeit eines von einem Benutzer über eine Benutzerschnittstelle 33 der Steuerung 30 abgegebenen Bedienbefehls ausgebbar sein.

Alternativ oder in Kombination kann zumindest ein wie zuvor beschriebenes Steuersignal durch die Steuerung 30 in Abhängigkeit zumindest eines durch die Steuerung 30 erfassten Betriebsparameters p1 des Fahrantriebs 1 ausgebbar sein. Wie in den Figur 1a bis 1c dargestellt, kann der zumindest eine durch die Steuerung 30 erfasste Betriebsparameter p1 ein zumindest an einer Ausgangsseite 92 der Pumpe 9 durch einen Drucksensor P erfasster Hydraulikdruck p1 sein. Sensorsignale des Drucksensors P können der Steuerung 30 über eine Signalleitung 34 zuführbar sein.

Dabei kann vorteilhaft bei einem Unterschreiten eines vorgegebenen oder vorgebbaren Grenzwerts des erfassten Hydraulikdrucks p1 mit dem Steuersignal zum zumindest teilweisen Abschalten zumindest eines Hydraulikmotors 3, 4 ein Schaltzustand des zumindest einen in einer Fluidleitung 10, 11 zwischen der Pumpe 9 und dem zumindest einen zumindest teilweise abzuschaltenden Hydraulikmotor 3, 4 angeordneten steuerbaren Schaltventils 20, 21 in einen zumindest teilweise fluidsperrenden Schaltzustand schaltbar sein. Dies gilt analog für die Ausführungen der Figuren 2a bis 2c und 3a bis 3c, bei welchen eine Druckdifferenz zwischen einer Eingangsseite 91 und Ausgangsseite 92 der Pumpe 9 erfassbar ist.

Bei einem Überschreiten eines vorgegebenen oder vorgebbaren Grenzwerts des erfassten Hydraulikdrucks p1 kann vorteilhaft mit dem Steuersignal zum zumindest teilweisen Zuschalten zumindest eines Hydraulikmotors 3, 4 ein Schaltzustand des zumindest einen in einer Fluidleitung 10, 11 zwischen der Pumpe 9 und dem zumindest einen zumindest teilweise zuzuschaltenden Hydraulikmotor 3, 4 angeordneten steuerbaren Schaltventils 20, 21 in einen zumindest teilweise fluidleitenden Schaltzustand schaltbar sein. Dies gilt analog für die Ausführungen der Figuren 2a bis 2c und 3a bis 3c, bei welchen eine Druckdifferenz zwischen einer Eingangsseite 91 und Ausgangsseite 92 der Pumpe 9 erfassbar ist.

Die mit Hydraulikfluid 41 antreibbaren Hydraulikmotoren 3, 4, 5 können eine Eingangsseite und eine Ausgangsseite aufweisen, wobei in den Figuren 1a bis 1c exemplarisch die Eingangsseite 61 und die Ausgangsseite 62 des Hydraulikmotors 3 mit Bezugszeichen versehen sind. Wie in den Figuren 1b und 1c gezeigt ist, sind in dem zumindest teilweise fluidsperrenden Schaltzustand der in der Fluidleitung 10, 11 zwischen der Pumpe 9 und dem zumindest einen zumindest teilweise abzuschaltenden Hydraulikmotor 3, 4 angeordneten steuerbaren Schaltventile 20, 21 die Eingangsseite 61 und die Ausgangsseite 62 des zumindest einen zumindest teilweise abzuschaltenden Hydraulikmotors 3, 4 über das Schaltventil 20, 21 zumindest teilweise fluidleitenden miteinander verbunden. Eine zumindest teilweise fluidleitende Verbindung kann über das Schaltventil 20, 21 erfolgen, wobei das Schaltventil eine daran angeschlossene, in der entsprechenden Schaltstellung die Eingangsseite 61 und die Ausgangsseite 62 des zumindest einen zumindest teilweise abzuschaltenden Hydraulikmotors 3, 4 verbindende Verbindungsleitung 43 aufweisen kann. Eine zumindest teilweise fluidleitende Verbindung kann in einer weiteren Ausführung durch das Schaltventil 20, 21 selbst erfolgen, wobei das Schaltventil 20, 21 die Eingangsseite 61 und die Ausgangsseite 62 des zumindest einen zumindest teilweise abzuschaltenden Hydraulikmotors 3, 4 verbindende Fluidleitungen, insbesondere eine intern ausgebildete Verbindungsleitung 43, aufweisen kann.

In den Figuren 2a bis 2c ist eine zweite Ausführung eines Fahrantriebs 1 gezeigt. Die Ausführung unterscheidet sich im Wesentlichen von jener der Figuren 1a bis 1c durch das Schaltventil 22 und durch die Erfassung der Betriebsparameter in Form der Hydraulikdrücke p1, p2.

Die gezeigte Ausführung weist ein Schaltventil 22 an parallel geschalteten Eingangsseiten 61, 63 und an parallel geschalteten Ausgangsseiten 62, 64 der zwei Hydraulikmotoren 3, 4 auf. Die zwei Hydraulikmotoren 3, 4 sind durch das gemeinsame Schaltventil 22 gemeinsam schaltbar.

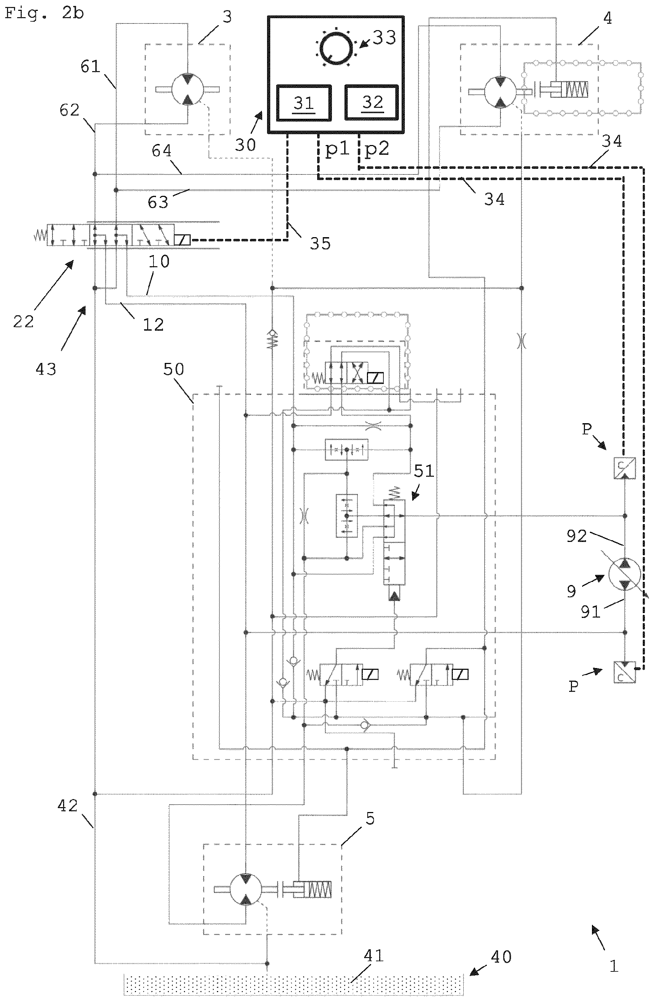

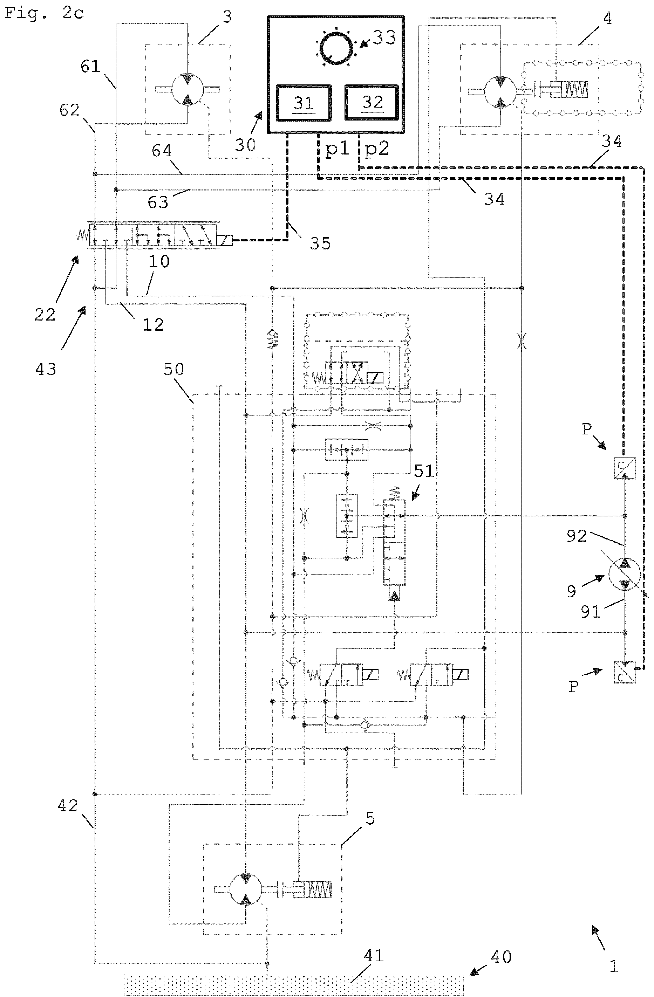

Das steuerbare Schaltventil 22 kann zumindest zwischen einem im Wesentlichen vollständig fluidsperrenden Schaltzustand (siehe speziell Figur 2c) und einem im Wesentlichen ungehindert fluidleitenden Schaltzustand (siehe speziell Figur 2a) schaltbar sein, wobei das Schaltventil in zumindest einer Zwischenstellung des Schaltventils 22 einen hydraulischen Leerlauf aufweist (siehe speziell Figur 2b). In einem solchen wie in Figur 2b gezeigten Schaltzustand können die Eingangsseite und die Ausgangsseiten des Schaltventils 22 miteinander fluidleitend verbunden sein. Eine solcher Schaltzustand ist als "open center" bekannt.

Das Schaltventil 22 kann als Ventil mit diskreten Schaltzuständen ausgeführt sein oder als Proportionalventil ausgeführt sein.

Durch einen wie in Figur 2a konfigurierten Fahrantrieb kann 1 ein Antrieb von drei Hydraulikmotoren 3, 4, 5 erfolgen. Bei einem Übergang der Figur 2a zu Figur 2c wird das Schaltventil 22 in einen fluidsperrenden Schaltzustand geschaltet. Durch einen so konfigurierten Fahrantrieb 1 kann ein Antrieb eines einzelnen Hydraulikmotors 5 erfolgen. Umgekehrt kann bei einem Übergang der Figur 2c zu Figur 2a das Schaltventil 22 in einen fluidleitenden Schaltzustand geschaltet werden und wieder ein Antrieb von drei Hydraulikmotoren 3, 4, 5 erfolgen.

Bei einer wie in Figur 2b gezeigten Zwischenstellung können die Eingangsseite und die Ausgangsseiten des Schaltventils 22 miteinander fluidleitend verbunden sein, wobei zudem über die Tankleitung 42 eine Verbindung mit dem Hydrauliktank 40 bestehen kann. Mit einer solchen Zwischenstellung kann es möglich sein, den Schaltzustand eines Schaltventils 22 während des Fahrbetriebs des Fahrantriebs 1 umzuschalten. Bei einer solchen Ausführung des zumindest einen Schaltventils 22 mit einer "open center" Zwischenstellung kann mit einem Steuersignal zum zumindest teilweisen Zuschalten oder Abschalten das Schaltventil 22 in einen die Eingangsseite und die Ausgangsseiten des Schaltventils 22 zumindest teilweise miteinander fluidleitend verbundenen Schaltzustand geschaltet werden.

In der gezeigten Ausführung kann der zumindest eine durch die Steuerung 30 erfasste Betriebsparameter p1, p2 eine Druckdifferenz zwischen einem an einer Ausgangsseite 92 der Pumpe 9 durch einen Drucksensor P erfassten Hydraulikdruck p1 und einem an einer Eingangsseite 91 der Pumpe 9 durch einen Drucksensor P erfassten Hydraulikdruck p2 sein.

In den Figuren 3a bis 3c ist eine dritte Ausführung eines Fahrantriebs 1 gezeigt. Die Ausführung unterscheidet sich im Wesentlichen von jener der Figuren 1a bis 1c durch die Schaltventile 22, welche in ihrer jeweiligen Ausführung dem Schaltventil 22 der Figuren 2a bis 2c entsprechen, und durch die Erfassung des Betriebsparameters in Form des Hydraulikdrucks p1, p2, welche jener der Figuren 2a bis 2c entspricht.

Die Schaltventile 22, 23 sind jeweils an einer Eingangsseite 61, 63 und einer Ausgangsseite 62, 64 der Hydraulikmotoren 3, 4 angeordnet, wodurch diese einzeln oder gemeinsam schaltbar sind.

Im Unterschied zur Ausführung der Figuren 1a bis 1c weisen die Schaltventile 22, 23 wie jene der Ausführung der Figuren 2a bis 2c in zumindest einer Zwischenstellung des Schaltventils 22, 23 einen hydraulischen Leerlauf auf, wobei diese Schaltstellung nicht eigens illustriert ist.

Die Schaltventile 22, 23 können als Ventile mit diskreten Schaltzuständen ausgeführt sein oder als Proportionalventile ausgeführt sein.

Die möglichen fluidleitenden und fluidsperrenden Schaltzustände der Schaltventile 22, 23 der Figuren 2a bis 2c - und die entsprechenden Übergänge zwischen den Figuren - entsprechen im Wesentlichen jenen der Figuren 1a bis 1c.

In Figur 4 ist exemplarisch eine Ausführung eines Hydraulikmotors 3 gezeigt. Der Hydraulikmotor 3 weist in der gezeigten Ausführung Hydraulikanschlüsse für die Eingangsseite 61 und die Ausgangsseite 62, einen Flansch 65 für eine Befestigung an einem Rahmen einer Hebevorrichtung 2 und einen Radfelgenflansch 66 für ein Antriebsrad 6 auf. Die Hydraulikmotoren 4, 5 können analog einen Radfelgenflansch 66 für die Antriebsräder 7, 8 aufweisen.

In den Figuren 5a und 5b ist eine Ausführung einer Hebevorrichtung 2 mit drei einzeln, durch einen wie zuvor beschriebenen, gemäß der Figuren 1a bis 1c, 2a bis 2c oder 3a bis 3c ausgebildeten Fahrantrieb 1 angetriebenen Antriebsrädern 6, 7, 8 gezeigt. Die Hebevorrichtung 2 kann wie dargestellt als Gabelstapler ausgeführt sein. Ein Fahrantrieb 1 einer solchen als Gabelstapler ausgeführten Hebevorrichtung 2 kann drei mit Hydraulikfluid 41 antreibbare Hydraulikmotoren 3, 4, 5 zum Einzelradantrieb der drei Antriebsräder 6, 7, 8 aufweisen. Dabei kann der Fahrantrieb 1 zwei antreibbare Vorderräder 3, 4 und ein antreibbares Hinterrad 5 aufweisen.

Figur 6 zeigt schematisch den Ablauf einer vorteilhaften Ausführung eines Verfahrens zur Versorgung eines wie zuvor beschriebenen, zumindest zwei Hydraulikmotoren 3, 4, 5 zum Einzelradantrieb von Antriebsrädern 6, 7, 8 aufweisenden Fahrantriebs 1 einer Hebevorrichtung 2 mit Hydraulikfluid 41.

Dabei kann ein Fördern i von Hydraulikfluid 41 aus einem Hydrauliktank 40 durch eine Pumpe 9 zur Versorgung der anzutreibenden Hydraulikmotoren 3, 4, 5 des Fahrantriebs 1 mit Hydraulikfluid 41 erfolgen.

In Abhängigkeit zumindest eines durch die Steuerung 30 ausgegebenen Steuersignals kann ein Steuern ii eines Schaltzustands zumindest eines in einer Fluidleitung 10, 11 zwischen der Pumpe 9 und zumindest einem der Hydraulikmotoren 3, 4 angeordneten schaltbaren Schaltventils 20, 21, 22, 23 erfolgen.

Bei dem Steuern ii eines Schaltzustands kann mit einem Steuersignal zum zumindest teilweisen Abschalten iii zumindest eines Hydraulikmotors 3, 4 ein Schaltzustand des zumindest einen in einer Fluidleitung 10, 11 zwischen der Pumpe 9 und dem zumindest einen zumindest teilweise abzuschaltenden Hydraulikmotor 3, 4 angeordneten steuerbaren Schaltventils 20, 21, 22, 23 in einen zumindest teilweise fluidsperrenden Schaltzustand geschalten werden.

Mit einem Steuersignal zum zumindest teilweisen Zuschalten iv zumindest eines Hydraulikmotors 3, 4, 5 kann bei dem Steuern ii eines Schaltzustands ein Schaltzustand des zumindest einen in einer Fluidleitung 10, 11 zwischen der Pumpe 9 und dem zumindest einen zumindest teilweise zuzuschaltenden Hydraulikmotor 3, 4 angeordneten steuerbaren Schaltventils 20, 21, 22, 23 in einen zumindest teilweise fluidleitenden Schaltzustand geschalten werden.

Eine Ausgabe des zumindest einen Steuersignals durch die Steuerung 30 kann dabei in Abhängigkeit einer Abgabe v eines Bedienbefehls eines Benutzers über eine Benutzerschnittstelle 33 der Steuerung 30 erfolgen.

Alternativ oder in Kombination kann ein Erfassen vi zumindest eines Betriebsparameters p1, p2 des Fahrantriebs 1 erfolgen und eine Ausgabe des zumindest einen Steuersignals durch die Steuerung 30 in Abhängigkeit des zumindest einen erfassten Betriebsparameters p1, p2 erfolgen. Dabei kann bei einem Unterschreiten eines vorgegebenen oder vorgebbaren Grenzwerts des erfassten Hydraulikdrucks p1, p2 mit dem Steuersignal zum zumindest teilweisen Abschalten iii zumindest eines Hydraulikmotors 3, 4 ein Schalten des zumindest einen in einer Fluidleitung 10, 11 zwischen der Pumpe 9 und dem zumindest teilweise abzuschaltenden Hydraulikmotor **3,** 4 angeordneten steuerbaren Schaltventils **20, 21, 22,** 23 in einen zumindest teilweise fluidsperrenden Schaltzustand erfolgen und/oder bei einem Überschreiten eines vorgegebenen oder vorgebbaren Grenzwerts des erfassten Hydraulikdrucks p1, p2 mit dem Steuersignal zum zumindest teilweisen Zuschalten iv zumindest eines Hydraulikmotors 3, 4 ein Schalten des zumindest einen in einer Fluidleitung 10, 11 zwischen der Pumpe 9 und dem zumindest teilweise zuzuschaltenden Hydraulikmotor 3, 4 angeordneten steuerbaren Schaltventils 20, 21, 22, 23 in einen zumindest teilweise fluidleitenden Schaltzustand erfolgen.

### Bezugszeichenliste

- 1: Fahrantrieb
- 2: Hebevorrichtung
- 3, 4, 5: Hydraulikmotoren
- 6, 7, 8: Antriebsräder
- 9: Pumpe
- 10, 11: Fluidleitung
- 12, 13: Fluidleitung
- 20, 21, 22, 23: Schaltventile

- 30: Steuerung
- 31: Recheneinheit
- 32: Speichereinheit
- 33: Benutzerschnittstelle
- 34: Signalleitung
- 35: Steuerleitung

- 40: Hydrauliktank
- 41: Hydraulikfluid
- 42: Tankleitung
- 43: Verbindungsleitung

- 50: Differentialsperre
- 51: Schaltventil Differentialsperre

- 61, 63: Eingangsseite Hydraulikmotor
- 62, 64: Ausgangsseite Hydraulikmotor
- 65: Flansch
- 66: Radfelgenflansch
- 91: Eingangsseite Pumpe
- 92: Ausgangsseite Pumpe
- 90: Antriebsschaft Pumpe

- P: Drucksensor
- p1, p2: Hydraulikdruck

- i: Fördern im Verfahren
- ii: Steuern im Verfahren
- iii: Abschalten im Verfahren
- iv: Zuschalten im Verfahren
- v: Abgeben im Verfahren
- vi: Erfassen im Verfahren

## Patentansprüche

1. Fahrantrieb (1) für eine Hebevorrichtung (2) mit:
- zumindest zwei mit Hydraulikfluid (41) antreibbaren Hydraulikmotoren (3, 4, 5) zum Einzelradantrieb von Antriebsrädern (6, 7, 8)
- zumindest einer Pumpe (9) zur Versorgung der Hydraulikmotoren (3, 4, 5) mit Hydraulikfluid (41)
- zumindest einem in einer Fluidleitung (10, 11) zwischen der Pumpe (9) und zumindest einem der Hydraulikmotoren (3, 4) angeordneten, mit einem Steuersignal steuerbaren Schaltventil (20, 21, 22, 23)
- einer Steuerung (30) zum Steuern des zumindest einen steuerbaren Schaltventils (20, 21, 22, 23) mit zumindest einem Steuersignal
wobei das zumindest eine steuerbare Schaltventil (20, 21, 22, 23) zumindest zwischen einem zumindest teilweise fluidsperrenden Schaltzustand und einem zumindest teilweise fluidleitenden Schaltzustand schaltbar ist und die Steuerung (30) dazu ausgebildet ist,
mit einem Steuersignal zum zumindest teilweisen Abschalten zumindest eines Hydraulikmotors (3, 4) einen Schaltzustand des zumindest einen in einer Fluidleitung (10, 11) zwischen der Pumpe (9) und dem zumindest einen zumindest teilweise abzuschaltenden Hydraulikmotor (3, 4) angeordneten steuerbaren Schaltventils (20, 21, 22, 23) in einen zumindest teilweise fluidsperrenden Schaltzustand zu schalten, und
mit einem Steuersignal zum zumindest teilweisen Zuschalten zumindest eines Hydraulikmotors (3, 4) einen Schaltzustand des zumindest einen in einer Fluidleitung (10, 11) zwischen der Pumpe (9) und dem zumindest einen zumindest teilweise zuzuschaltenden Hydraulikmotor (3, 4) angeordneten steuerbaren Schaltventils (20, 21, 22, 23) in einen zumindest teilweise fluidleitenden Schaltzustand zu schalten.

2. Fahrantrieb nach dem vorangehenden Anspruch, wobei das zumindest eine Steuersignal durch die Steuerung (30) in Abhängigkeit eines von einem Benutzer über eine Benutzerschnittstelle (33) der Steuerung (30) abgegebenen Bedienbefehls ausgebbar ist.

3. Fahrantrieb nach einem der vorangehenden Ansprüche, wobei das zumindest eine Steuersignal durch die Steuerung (30) in Abhängigkeit zumindest eines durch die Steuerung (30) erfassten Betriebsparameters (p1, p2) des Fahrantriebs (1) ausgebbar ist.

4. Fahrantrieb nach dem vorangehenden Anspruch, wobei der zumindest eine durch die Steuerung (30) erfasste Betriebsparameter (p1, p2) ein zumindest an einer Ausgangsseite (92) der Pumpe (9) durch einen Drucksensor (P) erfasster Hydraulikdruck (p1, p2) ist.

5. Fahrantrieb nach dem vorangehenden Anspruch, wobei
- bei einem Unterschreiten eines vorgegebenen oder vorgebbaren Grenzwerts des erfassten Hydraulikdrucks (p1, p2) mit dem Steuersignal zum zumindest teilweisen Abschalten zumindest eines Hydraulikmotors (3, 4) ein Schaltzustand des zumindest einen in einer Fluidleitung (10, 11) zwischen der Pumpe (9) und dem zumindest einen zumindest teilweise abzuschaltenden Hydraulikmotor (3, 4) angeordneten steuerbaren Schaltventils (20, 21, 22, 23) in einen zumindest teilweise fluidsperrenden Schaltzustand schaltbar ist und/oder
- bei einem Überschreiten eines vorgegebenen oder vorgebbaren Grenzwerts des erfassten Hydraulikdrucks (p1, p2) mit dem Steuersignal zum zumindest teilweisen Zuschalten zumindest eines Hydraulikmotors (3, 4) ein Schaltzustand des zumindest einen in einer Fluidleitung (10, 11) zwischen der Pumpe (9) und dem zumindest einen zumindest teilweise zuzuschaltenden Hydraulikmotor (3, 4) angeordneten steuerbaren Schaltventils (20, 21, 22, 23) in einen zumindest teilweise fluidleitenden Schaltzustand schaltbar ist.

6. Fahrantrieb nach einem der vorangehenden Ansprüche, wobei die mit Hydraulikfluid (41) antreibbaren Hydraulikmotoren (3, 4, 5) eine Eingangsseite (61) und eine Ausgangsseite (62) aufweisen, wobei in dem zumindest teilweise fluidsperrenden Schaltzustand des zumindest einen in der Fluidleitung (10, 11) zwischen der Pumpe (9) und dem zumindest einen zumindest teilweise abzuschaltenden Hydraulikmotor (3, 4) angeordneten steuerbaren Schaltventils (20, 21, 22, 23) die Eingangsseite (61, 63) und die Ausgangsseite (62, 64) des zumindest einen zumindest teilweise abzuschaltenden Hydraulikmotors (3, 4) über das Schaltventil (20, 21, 22, 23) zumindest teilweise fluidleitenden miteinander verbunden sind.

7. Fahrantrieb nach einem der vorangehenden Ansprüche, wobei der Fahrantrieb (1) drei mit Hydraulikfluid (41) antreibbare Hydraulikmotoren (3, 4, 5) zum Einzelradantrieb von drei Antriebsrädern (6, 7, 8) aufweist, wobei der Fahrantrieb (1) für zwei der Hydraulikmotoren (3, 4) zumindest ein in der Fluidleitung (10, 11) zwischen der Pumpe (9) und den zwei Hydraulikmotoren (3, 4) angeordnetes steuerbares Schaltventil (20, 21, 22, 23) aufweist, wobei das zumindest eine Steuersignal durch die Steuerung (30) in Abhängigkeit zumindest eines durch die Steuerung (30) zumindest an einer Ausgangsseite der Pumpe (9) durch einen Drucksensor (P) erfassten Hydraulikdrucks (p1, p2) ausgebbar ist, wobei
- bei einem Unterschreiten eines vorgegebenen oder vorgebbaren Grenzwerts des erfassten Hydraulikdrucks (p1, p2) mit dem Steuersignal zum zumindest teilweisen Abschalten zumindest eines der zwei Hydraulikmotoren (3, 4) ein Schaltzustand des zumindest einen in einer Fluidleitung (10, 11) zwischen der Pumpe (9) und dem zumindest einen zumindest teilweise abzuschaltenden Hydraulikmotor (3, 4) angeordneten steuerbaren Schaltventils (20, 21, 22, 23) in einen zumindest teilweise fluidsperrenden Schaltzustand schaltbar ist und/oder
- bei einem Überschreiten eines vorgegebenen oder vorgebbaren Grenzwerts des erfassten Hydraulikdrucks (p1, p2) mit dem Steuersignal zum zumindest teilweisen Zuschalten zumindest eines der zwei Hydraulikmotoren (3, 4) ein Schaltzustand des zumindest einen in einer Fluidleitung (10, 11) zwischen der Pumpe (9) und dem zumindest einen zumindest teilweise zuzuschaltenden Hydraulikmotor (3, 4) angeordneten steuerbaren Schaltventils (20, 21, 22, 23) in einen zumindest teilweise fluidleitenden Schaltzustand schaltbar ist.

8. Fahrantrieb nach einem der vorangehenden Ansprüche, wobei das zumindest eine steuerbare Schaltventil (20, 21, 22, 23) zumindest einen im Wesentlichen vollständig fluidsperrenden Schaltzustand und einem im Wesentlichen ungehindert fluidleitenden Schaltzustand aufweist, wobei das Schaltventil (20, 21, 22, 23) in zumindest einer Zwischenstellung des Schaltventils (20, 21, 22, 23) einen hydraulischen Leerlauf aufweist.

9. Verfahren zur Versorgung eines zumindest zwei Hydraulikmotoren (3, 4, 5) zum Einzelradantrieb von Antriebsrädern (6, 7, 8) aufweisenden Fahrantriebs (1) einer Hebevorrichtung (2) mit Hydraulikfluid (41) nach einem der vorangehenden Ansprüche, wobei
- ein Fördern (i) von Hydraulikfluid (41) durch eine Pumpe (9) zur Versorgung der Hydraulikmotoren (3, 4, 5) des Fahrantriebs (1) mit Hydraulikfluid (41) erfolgt
- ein Steuern (ii) eines Schaltzustands zumindest eines in einer Fluidleitung (10, 11) zwischen der Pumpe (9) und zumindest einem der Hydraulikmotoren (3, 4) angeordneten schaltbaren Schaltventils (20, 21, 22, 23) in Abhängigkeit zumindest eines durch die Steuerung (30) ausgegebenen Steuersignals erfolgt, wobei
mit einem Steuersignal zum zumindest teilweisen Abschalten (iii) zumindest eines Hydraulikmotors (3, 4) ein Schaltzustand des zumindest einen in einer Fluidleitung (10, 11) zwischen der Pumpe (9) und dem zumindest einen zumindest teilweise abzuschaltenden Hydraulikmotor (3, 4) angeordneten steuerbaren Schaltventils (20, 21, 22, 23) in einen zumindest teilweise fluidsperrenden Schaltzustand geschalten wird und/oder
mit dem Steuersignal zum zumindest teilweisen Zuschalten (iv) zumindest eines Hydraulikmotors (3, 4, 5) ein Schaltzustand des zumindest einen in einer Fluidleitung (10, 11) zwischen der Pumpe (9) und dem zumindest einen zumindest teilweise zuzuschaltenden Hydraulikmotor (3, 4) angeordneten steuerbaren Schaltventils (20, 21, 22, 23) in einen zumindest teilweise fluidleitenden Schaltzustand geschalten wird.

10. Verfahren nach dem vorangehenden Anspruch, wobei eine Ausgabe des zumindest einen Steuersignals durch die Steuerung (30) in Abhängigkeit einer Abgabe (v) eines Bedienbefehls eines Benutzers über eine Benutzerschnittstelle (33) der Steuerung (30) erfolgt.

11. Verfahren nach einem der Ansprüche 9 oder 10, wobei durch die Steuerung (30) ein Erfassen (vi) zumindest eines Betriebsparameters des Fahrantriebs (1) erfolgt und eine Ausgabe des zumindest einen Steuersignals durch die Steuerung (30) in Abhängigkeit des zumindest einen erfassten Betriebsparameters (p1, p2) erfolgt.

12. Verfahren nach dem vorangehenden Anspruch, wobei durch die Steuerung (30) ein Erfassen (v) zumindest eines an einer Ausgangsseite der Pumpe (9) durch einen Drucksensor (P) erfassten Hydraulikdrucks (p1, p2) erfolgt.

13. Verfahren nach dem vorangehenden Anspruch, wobei
- bei einem Unterschreiten eines vorgegebenen oder vorgebbaren Grenzwerts des erfassten Hydraulikdrucks (p1, p2) mit dem Steuersignal zum zumindest teilweisen Abschalten (iii) zumindest eines Hydraulikmotors (3, 4) ein Schalten des zumindest einen in einer Fluidleitung (10, 11) zwischen der Pumpe (9) und dem zumindest teilweise abzuschaltenden Hydraulikmotor (3, 4) angeordneten steuerbaren Schaltventils (20, 21, 22, 23) in einen zumindest teilweise fluidsperrenden Schaltzustand erfolgt und/oder
- bei einem Überschreiten eines vorgegebenen oder vorgebbaren Grenzwerts des erfassten Hydraulikdrucks (p1, p2) mit dem Steuersignal zum zumindest teilweisen Zuschalten (iv) zumindest eines Hydraulikmotors (3, 4) ein Schalten des zumindest einen in einer Fluidleitung (10, 11) zwischen der Pumpe (9) und dem zumindest teilweise zuzuschaltenden Hydraulikmotor (3, 4) angeordneten steuerbaren Schaltventils (20, 21, 22, 23) in einen zumindest teilweise fluidleitenden Schaltzustand erfolgt.

14. Hebevorrichtung (2), insbesondere Gabelstapler, mit einem Fahrantrieb (1) nach einem der Ansprüche 1 bis 8.
